# EUROPEAN PATENT SPECIFICATION

(11) **EP 0 361 683 B1**
(45) Date of publication and mention of the grant of the patent: **14.06.1995**
(21) Application number: 89308699.1
(22) Date of filing: 29.08.1989
(51) Int. Cl.: G06F 11/14

(54) **Data transfer method between memories**
Verfahren zur Datenübertragung zwischen Speichern
Méthode de transfert de données entre mémoires

(30) Priority: 30.08.1988 US 238641
(43) Date of publication of application: 04.04.1990
(73) Proprietor: AT&T GLOBAL INFORMATION SOLUTIONS INTERNATIONAL INC., Dayton, Ohio 45479 (US)
(72) Inventor: Smith, Walter Hannibal, Jr., Cambridge Ohio 43725 (US)
(74) Representative: Robinson, Robert George

(56) References cited:
- MICROPROCESSORS AND MICROSYSTEMS, vol. 9, no. 4, May 1985, pges 179-183,Guildford, Surrey, GB; B. SRINIVASAN et al.: "Recoverable file system formicroprocessor systems"
- IBM TECHNICAL DISCLOSURE BULLETIN, vol. 18, no. 8, January 1976, pages 2643-2644, New York, US; R.F. ARNOLD et al.: "Checkpoint copying"
- IBM TECHNICAL DISCLOSURE BULLETIN, vol. 23, no. 5, October 1980, pages 2091-2095, New York, US; R.W. COLLINS et al.: "Directory recovery"
- PROC. OF THE INTERNATIONAL CONFERENCE ON SUPERCOMPUTING SYSTEMS, Washington,DC, 16th - 20th December 1985, pages 265-272, IEEE, New York, US; J. KAUNITZ:"Database backup and recovery in transaction driven information systems"

## Description

This invention relates to a method for transferring a data base from a first memory means to a second memory means.

In modern day retail merchandising systems, which consist of a primary data terminal device and a plurality of remote secondary terminal devices, data generated by the secondary terminal devices during a merchandising operation is normally transmitted and stored in a disk file located in the primary terminal device. A backup system has been utilized to ensure that no data is lost when the primary terminal device becomes disabled. The backup system includes a second primary terminal device which receives the same data as the first primary terminal device during a merchandising operation. When the second primary terminal device becomes disabled or is withdrawn from operation, the data stored in the first primary terminal device is required to be downloaded to the second primary terminal device at the conclusion of a day's operation so as to update the data in the second primary terminal device. In downloading the data base, all the data space in the disk file is transferred regardless of whether the file contains stored data, hereinafter referred to as valid data, or empty space which contains no data, hereinafter referred to as invalid data. As the memory capacity of the present day terminal devices increases, the time required for downloading the data base of the first primary terminal device also increases.

It is the object of the present invention to provide a method for transferring a data base from a first memory means to a second memory means wherein the time required for such transfer is minimized.

Therefore, according to the present invention, there is provided a method for transferring data as set forth in claim 1.

One embodiment of the present invention will now be described by way of example, with reference to the accompanying drawings, in which:-
Fig. 1 is a schematic block diagram of the first and second primary terminal devices showing the arrangement for the downloading of the data from a first terminal device to a second terminal device;
Fig. 2 is an illustration showing how a portion of the disk file is constructed and the number of bytes of data that can be stored at a specific location in the disk file;
Fig. 3 is a schematic block diagram of the disk file of Fig. 1 showing how the disk file is divided into partitions together with the location of the directory blocks of data of the disk file;
Fig. 4 is a diagrammatic representation of how each bit location in a byte of freespace map is coupled to a corresponding granule of disk space;
Fig. 5 is an illustration of a directory block of data of the disk file which contains data indicating the location of the begin block and the end block of allocated data space in a partition;
Fig. 6 is an illustration of the begin block of a partition;
Fig. 7 is a flow chart of the overall backup downloading program;
Figs. 8A and 8B show a flow chart of a backup subroutine for detecting the location of the begin block and the end block of the data in each partition that is to be downloaded; and
Fig. 9 is a flow chart of a backup routine for downloading the valid data.

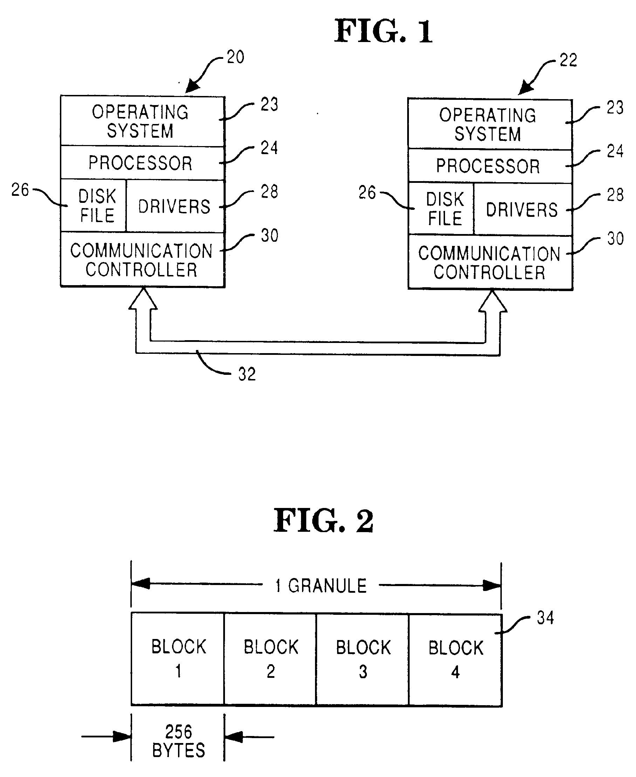

Referring now to Fig. 1, there is shown a schematic block diagram of the first and second primary terminal devices indicated by numerals 20 and 22 arranged for a downloading operation. Each of the terminal devices 20, 22 includes an operating system 23, a processor 24, a disk file 26 and a plurality of disk drivers 28 for writing and reading data in the disk file and a communication controller 30 for controlling the transfer of data over a communication bus 32 coupled between the terminal devices 20 and 22.

Referring now to Fig. 2, there is illustrated a portion of the disk file showing how the disk file 26 is divided into specific storage areas. The basic storage area in the disk file is a block of data 34 which comprises a maximum of 256 bytes of data. Four blocks of data comprise one granule containing a maximum of 1024 bytes of data.

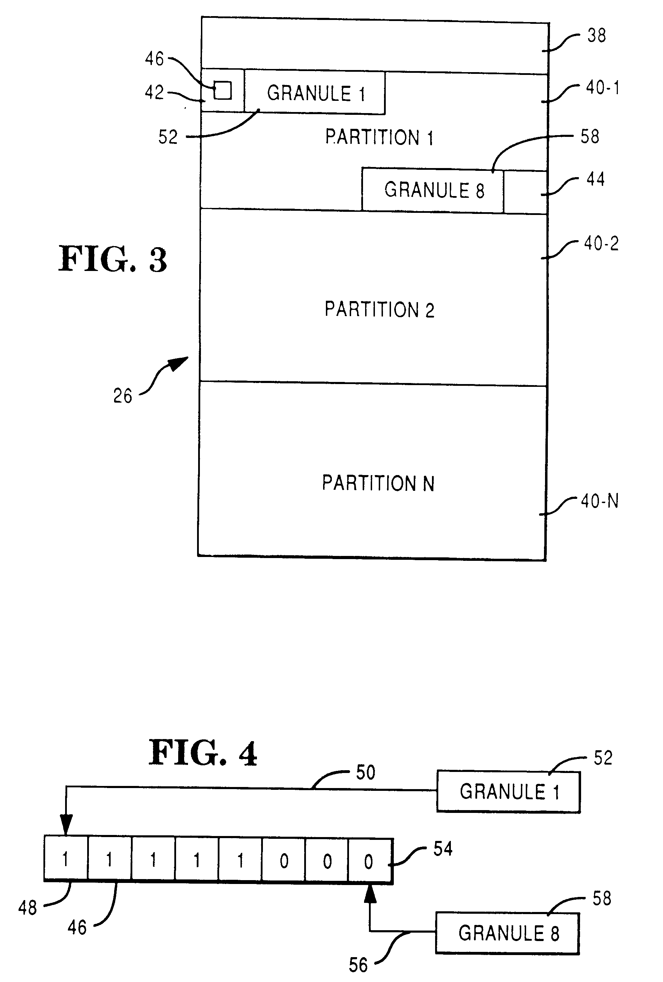

Referring now to Fig. 3, there is shown a schematic diagram of the disk file 26 (Fig. 1) in which the file of the present embodiment is divided into a number of partitions 40-1 to 40-N inclusive. The first row of data 38 of the disk file 26 contains thirty-three blocks of data comprising a directory in which the data represents the location of a first or begin block 42 and a last or end block 44, which blocks define the allocated disk space in each of the partitions 40-1 to 40-N in which data may be stored. The end block 44 in each of the partitions 40-1 to 40-N inclusive may be located at any position in the partition depending on the desired amount of data to be stored therein. In the present embodiment, the disk file 26 (Fig. 1) in each of the terminals may contain up to four partitions 40-1 to 40-N inclusive. As will be described more fully hereinafter, the begin block 42 for each partition contains data representing the number of freespace maps that are located in the begin block. A freespace map locates the number of granules of data in the partition which have valid data stored therein.

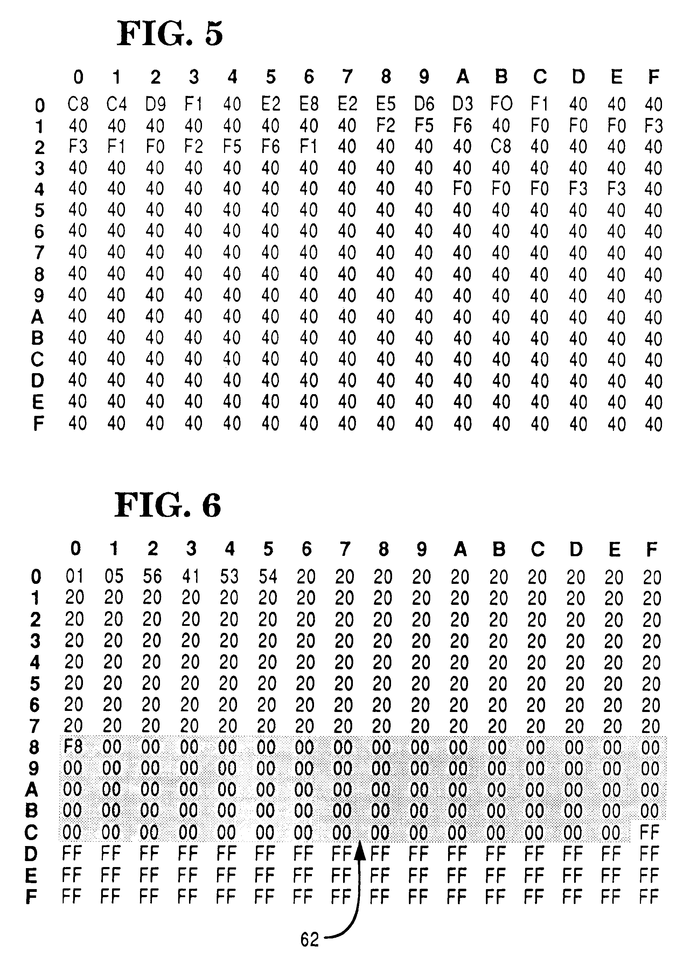

Referring now to Fig. 4, there is illustrated a diagrammatic representation of an eight bit portion 46 of a freespace map 62 (Fig. 6) located in the begin block 42 (Fig. 3) of each partition in which each bit in the map indicates whether or not valid data is contained in a corresponding granule of data. Each bit of the freespace map 46 may contain a binary one comprising a flag which represents that a corresponding granule of data in the partition contains valid data that is to be transferred. Thus the first bit 48 in the freespace map 46 represents the storage condition of a corresponding granule 52 of data, as indicated by the line 50. When the granule 52 is allocated by the operating system 23 (Fig. 1) for storage of valid data, the flag bit is set by the system 23 to one in block 48 of the freespace map 46. Thus, if the portion 46 contains the hexadecimal data F8 (Fig. 6), the blocks 48 would contain the binary bits illustrated. The eighth block 54 represents the storage condition of the number eight granule 58, as indicated by the line 56, and is set to a binary zero, representing that no valid data is stored in granule 58.

Referring now to Fig. 5, there is shown a typical directory block located in the directory row 38 (Fig. 3) of the disk file 26 (Fig. 1). As shown, the first row in the directory block contains hexadecimal data at locations 05-0C inclusive which indicates, according to a predetermined code, that this information relates to the first partition 40-1 (Fig. 3). In the second row starting at location 1C through location 20 in the third row, the hexadecimal data F0, F0, F0, F3 and F3 located therein indicates that the begin block of partition 40-1 is block 33. The hexadecimal data F0, F2, F5, F6 and F1 in locations 22-26 inclusive, in the third row represent the location of the end block of the partition, which in the present embodiment is 2561. By subtracting 33 from 2561, the partition 40-1 is indicated as having up to 2528 blocks of allocated data space, of which only the valid data contained therein is to be transferred.

Referring now to Fig. 6, there is shown the begin block 33 referred to in the description of Fig. 5, in partition 40-1. The hexadecimal signal 01 found at location 00 indicates that there is one freespace map for this partition. Each freespace map represents up to one megabyte of data. The freespace map indicated by the reference character 62 includes the digits 00 when no valid data is stored in the corresponding granules of data and includes hexadecimal data such as F8 (Fig. 4) which represents the granules having valid data stored therein. The freespace map starts at location 80 and extends through location CE, allowing the map to cover 632 granules of disk space.

Each partition may contain more than one freespace map, depending on the amount of data stored on the disk file. As previously described, when a granule is allocated for the storage of valid data by the operating system of the terminal device, a flag bit is set to 1 in the byte of the freespace map corresponding to that location in the physical disk layout, indicating an allocated granule. As will be described more fully hereinafter, by searching backwards from location CE at the end of the map, it will be found, in the present example, that the first non-zero byte F8 is at location 80, indicating the location of blocks of disk space that contain valid data. Since none of the bit flags in map 62 between locations CE and 81 have been turned on, no valid data is contained beyond the blocks represented by byte F8 and the downloading operation will be controlled so as to ignore these blocks. The digits 20 and FF shown in Fig. 6 are merely filler data indicating empty space.

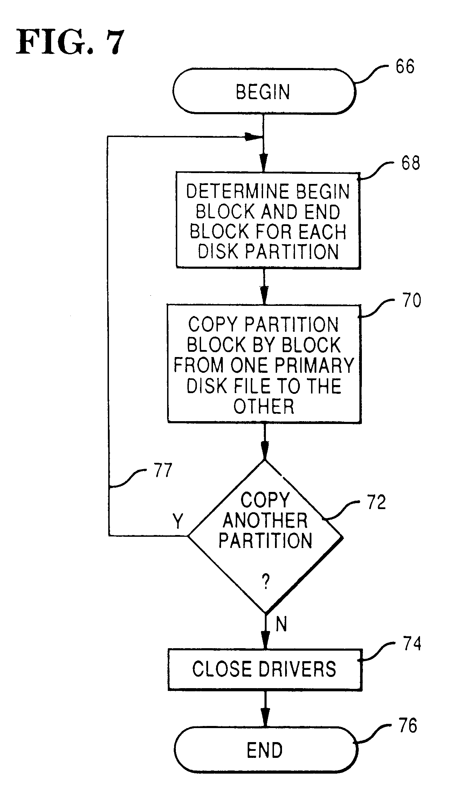

Referring now to Fig. 7, there is shown a flow chart of an overall view of a downloading operation which begins (block 66) by the processor 24 in terminal device 20 determining the begin block and the end block of each disk partition (block 68) in the disk file 26 by reading the information in the directory row 38 of the disk file 26 (Figs. 3 and 5) and then reading the freespace maps in the begin block to determine the location of the valid data in the partition. After detecting the valid data contained in the disk file, the processor 24 in the first primary terminal device 20 will enable the drivers 28 to transfer the valid data in each of the partitions by reading the data block by block from the primary disk file 26 to the other primary disk file 26 in the second primary terminal device 22 (block 70). As the valid data in each partition is transferred to the terminal device 22, the processor 24 in terminal device 20 will detect if another partition is to be transferred (block 72). If it is, the processor will return over line 77 to block 68 until all of the valid data in each of the partitions has been transferred. This processor will then disable the drivers (block 74) to complete (block 76) the transfer operation.

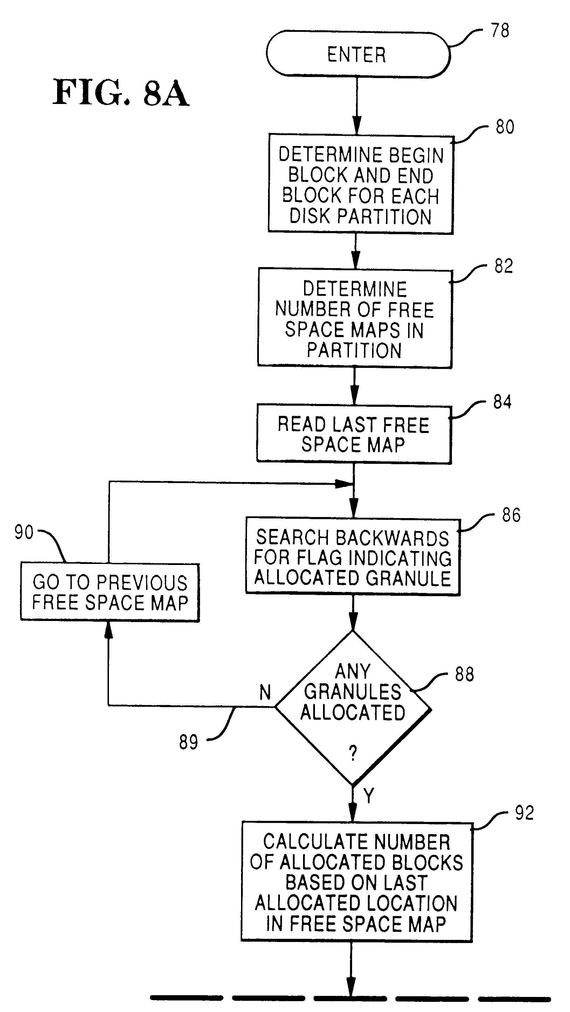

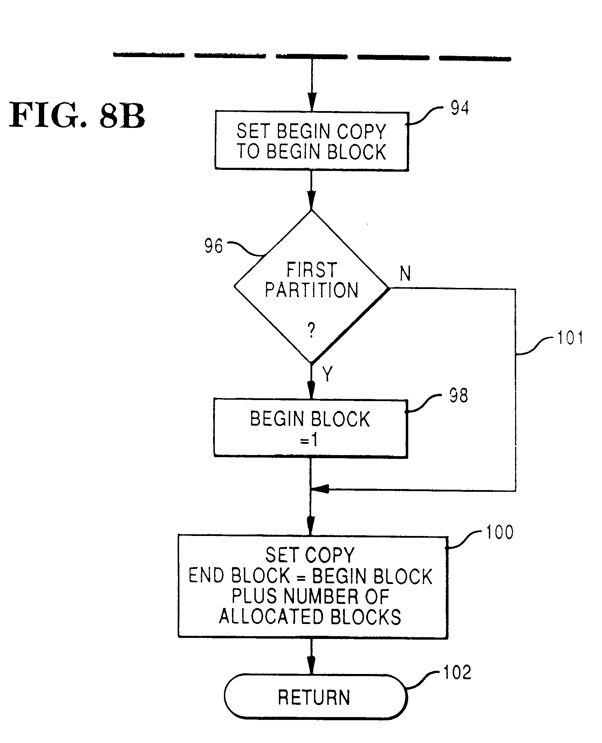

Referring now to Figs. 8A and 8B, there is shown a flow chart of the operation for determining the begin block and the end block of the valid data in each of the partitions. The processor 24 in terminal device 20 (Fig. 1) will start the operation (block 78) by determining the location of the begin block and the end block for each partition (block 80) by reading the blocks of data in the directory row 38 of the disk file 26 (Fig. 3). After detecting the location of the begin block in a partition, the processor will read the begin block (Fig. 6) to determine the number of freespace maps in the partition (block 82). The processor will then read the last freespace map (block 84) byte-by-byte for a flag indicating an allocated granule (Fig. 4) representing the storage of valid data. This is accomplished by reading backward from the last bit location on the freespace map for locating a flag indicating an allocated granule (block 86). If the processor cannot find any flag in the freespace map (block 88), the processor will return over line 89 to the previous freespace map (block 90) and repeat the operation for detecting an allocated granule (block 86). If the processor detects a flag in one of the blocks of data in the freespace map (block 88), the processor will then calculate the number of allocated blocks based on the last allocated location in the freespace maps (block 92) and then set the begin copy sequence to the begin block (block 94) position. The processor will then determine if the freespace map is associated with the first partition (block 96) and if it is, it will then set the begin block to the first block in row 1 of the disk file (block 98) which is the directory row 38 of the disk file (Fig. 3) which directory row is transferred with the valid data. The processor will then set the end block equal to the begin block plus the number of allocated blocks (block 100) and then return to its original position (block 102). If the partition to be copied is not the first partition, the system will go over line 101, bypassing the step of setting the begin block to the first block of the directory row of the disk file 26.

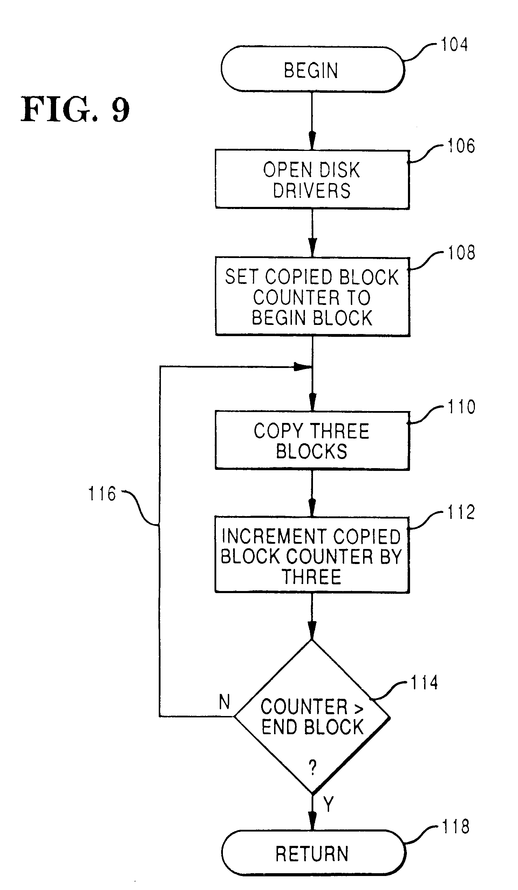

Referring now to Fig. 9, there is shown a flow chart of the downloading process in which the processor 24 of terminal device 20 will begin (block 104) by opening or operating the disk drivers 28 (Fig. 1) (block 106) for each of the partitions 40 (Fig. 3) and then set a counter (not shown) located in the disk file to the begin block (108) location. The processor will then copy three blocks of valid data (block 110) since this has been found to be the optimum transfer rate of the communication system. After the three blocks of valid data have been transferred, the processor increments the counter by three (block 112) and then checks to see if the output count of the counter is greater than the end block number (block 114). If it is not, it will then return over line 116 and copy the next three blocks (block 110) of data. If the count is greater than the number associated with the end block, the processor will return to its initial operating position (block 118).

It will be seen that by establishing a directory portion of the disk file to contain information which points to the location of the begin block and the end block of each partition which is allocated to contain data and then storing in each of the begin blocks the freespace maps which contain flags indicating which granules contain valid data, only valid data will be transferred to the backup primary terminal for updating the data base in the minimum amount of time.

## Claims

1. In apparatus including a first memory means (26 in 20) and a second memory means (26 in 22), wherein said first memory means (26 in 20) is divided into a plurality of defined memory areas (40-1 to 40-N), each containing a plurality of blocks of data space; wherein a first row (38) of data space of said first memory means (26 in 20) is adapted to store a plurality of sets of first data bits which provide the location of the first block (42) and the last block (44) of data space in each of said defined memory areas (40-1 to 40-N) locating the designated memory space in which data is stored; wherein each of said defined memory areas (40-1 to 40-N) is adapted to store at least one set of second data bits (62) identifying the location of valid and invalid data stored in said designated memory space; and wherein each said set of second data bits (62) includes first-type binary bits representing that valid data is stored in corresponding block groups of the associated defined memory area (40-1 to 40-N), and second type binary bits representing that invalid data is stored in corresponding block groups of the associated defined memory area (40-1 to 40-N), a method for transferring data from said first memory means (26 in 20) to said second memory means (26 in 22), characterized by the steps of searching said second data bits (62) in sequence in a predetermined direction to identify the location of the first first-type binary bit found during said searching; utilizing said location to determine a number of blocks of data that are to be transferred to said second memory means (26 in 20); and transferring the determined number of blocks of data to the second memory means (26 in 22)

2. A method according to claim 1, wherein third data bits are stored in said first block (42) of data space in each of said defined memory areas (40-1 to 40-N) indicating the number of sets of second data bits (62) stored in the associated defined memory area (40-1 to 40-N), characterized in that said step of searching includes the step of first searching the last one of said sets of second data bits (62).

## Patentansprüche

1. Verfahren zum Übertragen von Daten von einer ersten Speichereinrichtung (26 in 20) zu einer zweiten Speichereinrichtung (26 in 22) in einer Vorrichtung, die die erste Speichereinrichtung (26 in 20) und die zweite Speichereinrichtung (26 in 22) umfaßt, wobei die erste Speichereinrichtung (26 in 20) in eine Vielzahl definierter Speicherbereiche (40-1 bis 40-N) unterteilt ist, von denen jeder eine Vielzahl von Datenplatzblöcken enthält; wobei eine erste Datenplatzreihe (38) der ersten Speichereinrichtung (26 in 20) vorgesehen ist, um eine Vielzahl erster Datenbitsätze zu speichern, welche die Lage des ersten Blocks (42) und des letzten Blocks (44) des Datenplatzes in allen definierten Speicherbereichen (40-1 bis 40-N) liefern, die den vorgesehenen Speicherplatz anzeigen, in dem Daten gespeichert sind; wobei jeder dieser definierten Speicherbereiche (40-1 bis 40-N) ausgelegt ist, um wenigstens einen zweiten Datenbitsatz (62) zu speichern, der die Lage der in diesem vorgesehenen Speicherplatz gespeicherten gültigen und ungültigen Daten erkennt; und wobei alle zweiten Datenbitsätze (62) eine erste Art binärer Bits enthalten, die anzeigen, daß gültige Daten in korrespondierenden Blockgruppen des zugeordneten definierten Speicherbereiches (40-1 bis 40-N) gespeichert sind, und eine zweite Art binärer Bits, die anzeigen, daß ungültige Daten in korrespondierenden Blockgruppen des zugeordneten definierten Speicherbereiches (40-1 bis 40-N) gespeichert sind,
gekennzeichnet durch
die Schritte des Aufsuchens der zweiten Datenbits (62) in Reihenfolge in einer vorbestimmten Richtung, um die Lage des während dieser Suche gefundenen ersten binären Bits der ersten Art zu bestimmen; diese Lage zu benutzen, um eine Anzahl von Datenblöcken zu bestimmen, die auf die zweite Speichereinrichtung (26 in 20) übertragen werden sollen; und Übertragen der bestimmten Datenblockanzahl zu der zweiten Speichereinrichtung (26 in 22).

2. Verfahren nach Anspruch 1, wobei dritte Datenbits in dem ersten Datenplatzblock (42) in jedem der definierten Speicherbereiche (40-1 bis 40-N) gespeichert sind, die die Anzahl der zweiten Datenbitsätze (62) anzeigen, die in den zugeordneten definierten Speicherbereichen (40-1 bis 40-N) gespeichert sind, dadurch gekennzeichnet, daß der Schritt des Aufsuchens den Schritt umfaßt, daß zuerst der letzte der zweiten Datenbitsätze (62) aufgesucht wird.

## Revendications

1. Dans un appareil comportant un premier moyen mémoire (26 dans 20) et un deuxième moyen mémoire (26 dans 22), dans lequel ledit premier moyen mémoire (26 dans 20) est divisé en une pluralité de domaines de mémoire définis (40-1 à 40-N), chacune contenant une pluralité de blocs d'espace de données; dans lequel une première rangée (38) d'espace de données dudit premier moyen mémoire (26 dans 20) est adaptée pour mémoriser une pluralité d'ensembles de premiers bits utiles qui fournissent l'emplacement du premier bloc (42) et du dernier bloc (44) d'espace de données dans chacun desdits domaines de mémoire définis (40-1 à 40-N) repérant l'espace mémoire désigné dans lequel sont mémorisées des données; dans quoi chacun desdits domaines de mémoire définis (40-1 à 40-N) est adapté pour mémoriser au moins un ensemble de deuxièmes bits utiles (62) identifiant l'emplacement de données valides et invalides mémorisées dans ledit espace mémoire désigné; et dans lequel chaque dit ensemble de deuxièmes bits utiles (62) comporte des bits binaires de premier type indiquant que des données valides sont mémorisées dans des groupes de blocs correspondants du domaine de mémoire défini associé (40-1 à 40-N), et des bits binaires de deuxième type indiquant que des données invalides sont mémorisées dans des groupes de blocs correspondants du domaine de mémoire défini associé (40-1 à 40-N), une méthode pour transférer des données dudit premier moyen mémoire (26 dans 20) audit deuxième moyen mémoire (26 dans 22), caractérisée par les étapes du parcours desdits deuxièmes bits utiles (62) dans l'ordre dans un sens prédéterminé pour identifier l'emplacement du premier bit binaire de premier type trouvé lors dudit parcours; de l'utilisation dudit emplacement pour déterminer un certain nombre de blocs de données qui doivent être transférés audit deuxième moyen mémoire (26 dans 20); et du transfert du nombre déterminé de blocs de données au deuxième moyen mémoire (26 dans 22).

2. Une méthode conformément à la revendication 1, dans quoi des troisièmes bits utiles sont mémorisés dans ledit premier bloc (42) d'espace de données dans chacun desdits domaines de mémoire définis (40-1 à 40-N) indiquant le nombre d'ensembles de deuxièmes bits utiles (62) mémorisés dans le domaine de mémoire défini associé (40-1 à 40-N), caractérisée en ce que ladite étape du parcours comporte d'abord l'étape du parcours du dernier desdits ensembles de deuxièmes bits utiles (62).
